# EUROPÄISCHE PATENTSCHRIFT

(11) **EP 1 636 075 B1**
(45) Veröffentlichungstag und Bekanntmachung des Hinweises auf die Patenterteilung: **27.02.2008**
(21) Anmeldenummer: 04725602.9
(22) Anmeldetag: 03.04.2004
(51) Int. Cl.: B60S 1/04

(54) **SCHEIBENWISCHVORRICHTUNG, INSBESONDERE FÜR EIN KRAFTFAHRZEUG**
WINDSHIELD WIPER DEVICE, ESPECIALLY FOR A MOTOR VEHICLE
SYSTEME D'ESSUIE-GLACE, DESTINE EN PARTICULIER A UN VEHICULE AUTOMOBILE

(30) Priorität: 06.06.2003 DE 10325736
(43) Veröffentlichungstag der Anmeldung: 22.03.2006
(73) Patentinhaber: ROBERT BOSCH GMBH, 70442 Stuttgart (DE)
(72) Erfinder: WEILER, Michael, 363-9 Chungchongbuk-Do (KR); ZIMMER, Joachim, 77880 Sasbach (DE)
(86) Internationale Anmeldenummer: PCT/DE2004/000701
(87) Internationale Veröffentlichungsnummer: WO 2004/108489

(56) Entgegenhaltungen:
- EP-A- 1 122 137
- EP-A- 1 197 405
- WO-A-03/047925
- PATENT ABSTRACTS OF JAPAN Bd. 2000, Nr. 14, 5. März 2001 (2001-03-05) -& JP 2000 326829 A (MITSUBISHI MOTORS CORP), 28. November 2000 (2000-11-28)

## Beschreibung

### Stand der Technik

Die Erfindung betrifft eine Scheibenwischvorrichtung nach dem Oberbegriff des unabhängigen Anspruchs.

Es sind schon zahlreiche Scheibenwischvorrichtungen, beispielsweise aus der EP-A-0739792 bekannt, die ein Wischerlager aufweisen, das in einem Lagerabschnitt eine Wischerwelle lagert und ein Befestigungselement zur Befestigung am Kraftfahrzeug aufweist. Das Befestigungselement ist hierbei mit einer Sollbruchstelle versehen, die einen verringerten Widerstandsquerschnitt umfaßt. Im Falle eines heftigen Aufpralls auf die aus der Karosserie ragenden Wischerwellen wird die Scheibenwischvorrichtung an der Sollbruchstelle von der Karosserie des Fahrzeugs getrennt. Dadurch können die Wischerwellen in das Innere des Fahrzeugs gedrückt werden, um die Verletzungsgefahr beim Aufprall eines Fußgängers zu verringern. Problematisch ist hierbei, dass die Scheibenwischvorrichtung an der Sollbruchstelle zerstört wird und daher nach einem Unfall eine neue Scheibenwischvorrichtung benötigt wird.

Eine gattungsgemäße Scheibenwischvorrichtung ist darüber hinaus aus der EP-A-1197 405 bekannt.

Weiterhin ist aus der JP-A2000-326829 ein Wischerlager bekannt, welches beweglich mit der Karosserie des Kraftfahrzeugs verbunden ist und durch eine Sollbruchstelle arretiert ist.

Alternativ dazu ist es bereits bekannt, die Wischerwelle im Wischerlager axial verschiebbar mit einem Federmechanismus vorzusehen, so dass die Wischerwellen im Falle eines Aufpralls ebenso zurückweichen können. Solche federbelasteten Lager sind jedoch in der Wartung aufwändig und in der Lebensdauer beschränkt.

Weiterhin ist es bekannt axial verschiebbare Wischerwellen anstatt mit Federmechanismen mit Hilfe von Sollbruchelementen oder geschäumten Materialien zu arretieren. Hierbei handelt es sich ebenso um autodestruktive Vorrichtungen, bei denen nach einem Aufprall zumindest Teile der Scheibenwischvorrichtung ersetzt werden müssen.

### Vorteile der Erfindung

Die erfindungsgemäße Scheibenwischvorrichtung mit den Merkmalen des Hauptanspruchs hat den Vorteil, dass ein erstes Mittel zum beweglichen Verbinden zwischen dem Lagerabschnitt des Wischerlagers und dem Befestigungselement vorgesehen ist. Auf diese Weise ist eine einfache und wartungsarme Scheibenwischvorrichtung gegeben, die beim Aufprall eines Fußgängers nicht zerstört wird und darüber hinaus eine verbesserte Energieabsorbtion aufweist. Dadurch ergibt sich ein noch wirksamerer Schutz eines Fußgängers, der bei einem Unfall auf die Karosserie aufprallt, ohne daß nach einem Aufprall die Scheibenwischvorrichtung ersetzt werden muß.

Durch die in den Unteransprüchen aufgeführten Maßnahmen ergeben sich vorteilhafte Weiterbildungen und Verbesserungen der im Hauptanspruch angegebenen Merkmale.

Besonders vorteilhaft ist es, wenn mindestens ein weiteres Mittel zum Arretieren des Befestigungselementes am Lagerabschnitt vorgesehen ist, da auf diese Weise eine optimale axiale Steifigkeit der Scheibenwischvorrichtung gewährleistet ist.

Vorteilhafterweise ist der Lagerabschnitt des Wischerlagers bei einer axialen Krafteinwirkung auf die Wischerwelle im wesentlichen in Richtung der Krafteinwirkung bewegbar.

In einer besonders einfachen und kostengünstigen Ausführungsform der Erfindung ist das erste Mittel zum beweglichen verbinden des Lagerabschnitts mit dem Befestigungselement als Scharnier ausgebildet. Dies kann in einer besonders vorteilhaften Variante als Filmscharnier ausgebildet sein, aber natürlich sind auch andere Mechanismen, beispielsweise eine Verhakung oder eine Umklammerung möglich.

Das weitere Mittel ist vorteilhafterweise als kostengünstiges und erprobtes Clipselement ausgebildet.

In einer Variante kann das weitere Mittel auch als Sollbruchelement ausgebildet sein, welches sich nach einem Aufprall leicht ersetzen lässt, insbesondere so, dass die Scheibenwischvorrichtung nicht aus dem Kraftfahrzeug ausgebaut werden muss.

Besonders vorteilhaft ist es, wenn das weitere Mittel als Rastelement, insbesondere mit radienartiger Mehrfachverzahnung ausgebildet ist. Auf diese Weise ergibt sich eine gleichmäßige Energieabsorbtion, was bei einem Aufprall eines Kopfes zu geringeren Verletzungen führt.

Sind zumindest zwei radienartige Mehrfachverzahnungen vorgesehen, wird der Lagerabschnitt des Wischerlagers zusätzlich abgestützt.

Durch zwei unterschiedliche Radien der Mehrfachverzahnungen wird darüber hinaus eine einfachere Entformbarkeit bei der Fertigung im Spritzgussverfahren erzielt.

Weist das Befestigungselement ein befestigungsseitiges erstes Teil und ein lagerseitiges zweites Teil auf, die gegeneinander elastisch beweglich sind, so wird zum einen die Entkopplung zwischen Kraftfahrzeug und Scheibenwischvorrichtung verbessert, was sich in einem verbesserten Geräuschverhalten bemerkbar macht, zum anderen wird hier ein rotatorischer Freiheitsgrad gewonnen, so dass der Lagerabschnitt senkrecht zur Ebene des befestigungsseitigen ersten Teils des Befestigungselementes bewegbar ist.

Die radiale Abstützung des Lagerabschnitts wird durch eine Führung zwischen Befestigungselement und Lagerabschnitt des Wischerlagers erzielt.

In einer kostengünstigen und einfachen Ausführungsform ist das Wischerlagen aus Kunststoff ausgebildet.

### Zeichnungen

Ausführungsbeispiele der Erfindung sind in den Zeichnungen dargestellt und in der nachfolgenden Beschreibung näher erläutert.

Es zeigen:
Figur 1, eine erfindungsgemäße Scheibenwischvorrichtung in einer perspektivischen Darstellung,
Figur 2, ein erstes Ausführungsbeispiel eines Wischerlagers einer erfindungsgemäßen Scheibenwischvorrichtung in perspektivischer Darstellung,
Figur 3, das Wischerlager aus Figur 2 nach einem Aufprall,
Figur 4, ein weiteres Wischerlager einer erfindungsgemäßen Scheibenwischvorrichtung in einer Variation in einem Rastelement,
Figur 4a, das Rastelement aus Figur 4 im Detail,
Figur 5, das Wischerlager aus Figur 4, nach einem Aufprall,
Figur 6, ein weiteres Wischerlager einer erfindungsgemäßen Scheibenwischvorrichtung in einer weiteren Variation mit einem elastisch beweglichen Befestigungselement,
Figur 6a, ein Wischerlager einer erfindungsgemäßen Scheibenwischvorrichtung aus Figur 6 nach einem Aufprall und
Figur 7, ein Wischerlager einer erfindungsgemäßen Scheibenwischvorrichtung gemäß den Figuren 6 und 6a in perspektivischer Darstellung.

### Beschreibung der Ausführungsbeispiele

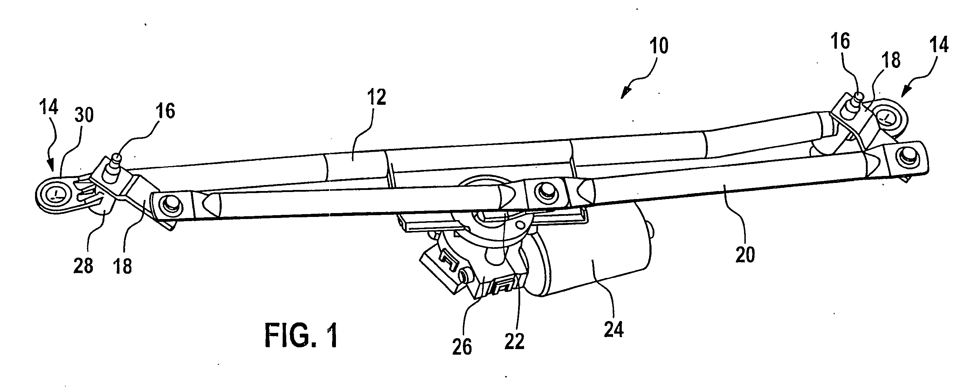

In Figur 1 ist eine erfindungsgemäße Scheibenwischvorrichtung 10 in perspektivischer Darstellung gezeigt. Diese umfasst im Wesentlichen eine Rohrplatine 12, die zwei Enden aufweist, an denen jeweils ein Wischerlager 14 befestigt ist. In den Wischerlagern 14 ist jeweils eine Wischerwelle 16 gelagert, an der die hier nicht gezeichneten Wischarme mit den Wischblättern befestigt sind. Die Enden der Wischerwellen 14 ragen in montiertem Zustand aus der Karosserie des Fahrzeugs heraus. Angetrieben werden die Wischerwellen 16 durch jeweils eine Kurbel 18, die über Schubstangen 20 und eine Motorkurbel 22 mit einem Antriebsmotor 24, mit dem Motorgetriebe 26 verbunden sind. Die Wischerlager 16 umfassen zumindest einen, die Wischerwelle 16 lagernden Lagerabschnitt 28 sowie ein Befestigungselement 30, mit dem die Wischerlager an der Karosserie eines Kraftfahrzeugs befestigt werden können.

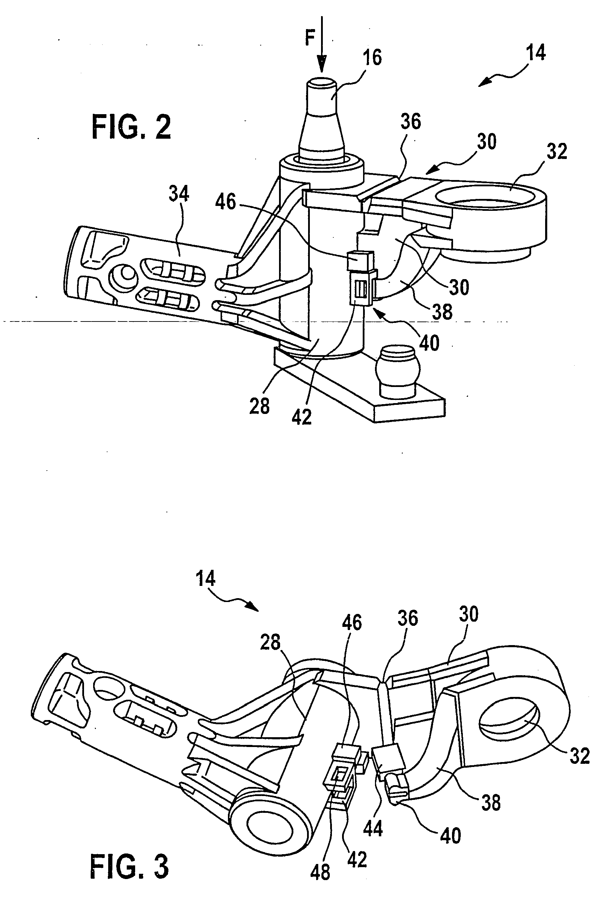

In Figur 2 ist ein Wischerlager 14 einer erfindungsgemäßen Scheibenwischvorrichtung im Detail gezeigt. Das Wischerlager 14 umfasst im Wesentlichen den Lagerabschnitt 28, indem die Wischerwelle 16 gelagert ist, sowie das Befestigungselement 30, das im Wesentlichen aus einer senkrecht zur Lagerachse angeordneten Platte besteht, die ein Auge 32 aufweist, dass zur Befestigung des Wischerlagers 14 an der Karosserie des Kraftfahrzeugs dient. Zur Befestigung der Rohrplatine 12 am Wischerlager 14 ist darüber hinaus ein Befestigungsstutzen 34 vorgesehen, der sich im Wesentlichen senkrecht zur Lagerachse des Lagerabschnitts 28 erstreckt und der in die Rohrplatine 12 eingeschoben ist und dort beispielsweise vercrimmpt oder vergossen ist.

Der Lagerabschnitt 28 und das Befestigungselement 30 sind mit einem Filmscharnier als erstes Mittel 36 beweglich verbunden. Zur Arretierung weist das Befestigungselement 30 einen bügelartigen Vorsprung 38 auf, an dessen freien Ende ein Clipselement 40 angeordnet ist. Das Clipselement 40 greift in ein Verbindungselement 42 ein, welches das Gegenstück zum Clipselement 40 darstellt und fest auf dem Lagerabschnitt 28 befestigt oder einstückig mit diesem ausgebildet ist. Zur verbesserten radialen Abstützung weist das Befestigungselement 30 darüber hinaus eine hier als Platte ausgebildete Führung 44 auf, die im eingeclipsten Zustand zwischen einer aus zwei Führungsbolzen gebildeten Aufnahme 46, die auf dem Lagerabschnitt 28 angeordnet ist, eingreift. Natürlich können die Führungsbolzen 46 einstückig mit dem Lagerabschnitt 28 ausgebildet sind. Ebenso ist es möglich die Führung 44 als Stift auszubilden, der mit einer Aufnahme 46 zusammenwirkt.

Wirkt nun eine im Wesentlichen axiale Krafteinwirkung F auf die Wischerwelle 16 und damit auf den Lagerabschnitt 28 des Wischerlagers 14, wie dies beispielsweise beim Aufprall eines Kopfes eines Fußgängers bei einem Unfall der Fall sein kann, so wird bei Übersteigen einer Maximalkraft das Clipselement 40 sich aus dem Verbindungselement 42 lösen und das Filmscharnier 36 den Lagerabschnitt 28 in Richtung der Krafteinwirkung F verschieben. Dies ist in Figur 3 dargestellt.

In Figur 3 ist das Wischerlager aus Figur 2 nach einem Aufprall dargestellt. Aus Gründen der Übersichtlichkeit wurde auf die Darstellung der Wischwelle 16 verzichtet. Das Befestigungselement 30 ist mit dem Lagerabschnitt 28 über das Filmscharnier 36 verbunden. Vom Befestigungselement 30 erstreckt sich der Vorsprung 38, der an seinem freien Ende des Clipselement 40 trägt. Das Clipselement 40 ist als symmetrisches Zwei-Bolzen-Clipselement vorgesehen, die in Aussparungen 48 des Verbindungselements 42 eingreifen, bzw. einzugreifen vermögen.

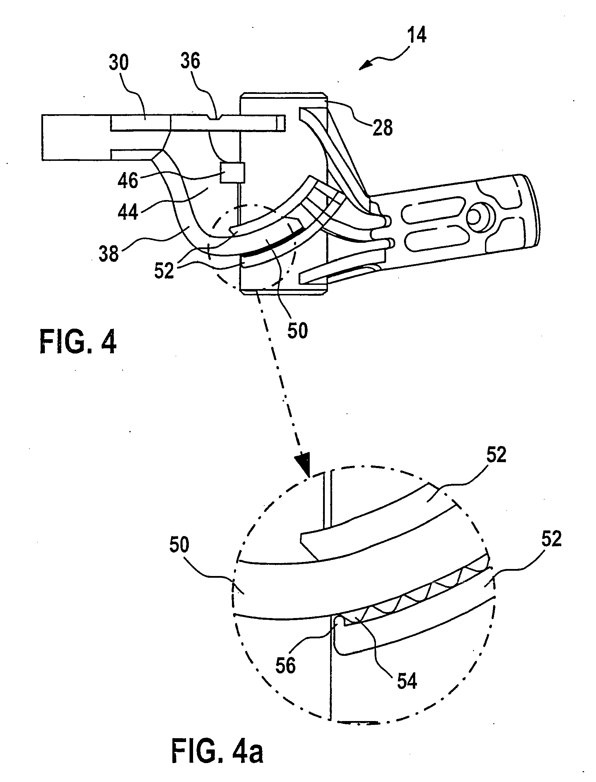

Figur 4 zeigt das Wischerlager 14 einer erfindungsgemäßen Scheibenwischvorrichtung in einer Variation. Das Befestigungselement 30 des Wischerlagers 14 ist wiederum durch ein Filmscharnier 36 mit dem Lagerabschnitt 28 des Wischerlagers 14 verbunden. Zur Arretierung weist das Befestigungselement 30 einen Vorsprung 38 auf, an dessen freien Ende ein radiusförmiger, im Querschnitt rechteckiger Fortsatz 50 gebildet ist. Der Fortsatz 50 vermag in einer Führungsbahn 52 zu gleiten und weist zumindest einen einzigen, vorteilhafterweise aber mehrere Rastnocken 54 auf (Figur 4a). Das Zentrum des Radius von Fortsatz 50 und Führungsbahn 52 liegt im Drehpunkt des Filmscharniers 36. Auch hier ist zur radialen Abstützung eine Führungsplatte 44 sowie Führungsbolzen 46 vorgesehen.

In Figur 4a ist der Fortsatz 50 in der Führungsbahn 52 im Detail dargestellt. Der radiusförmige Fortsatz 50 weist an seiner Außenseite mehrere Rastnocken 54 auf, die zur Arretierung des Fortsatzes 50 in der Führungsbahn 52 mit einer weiteren Rastnocke 56 als Hinterschnitt zusammenwirken. Natürlich können Rastnocken 54 und weitere Rastnocken 56 auch auf der Innenseite des Radius des Fortsatzes 50 angeordnet sein.

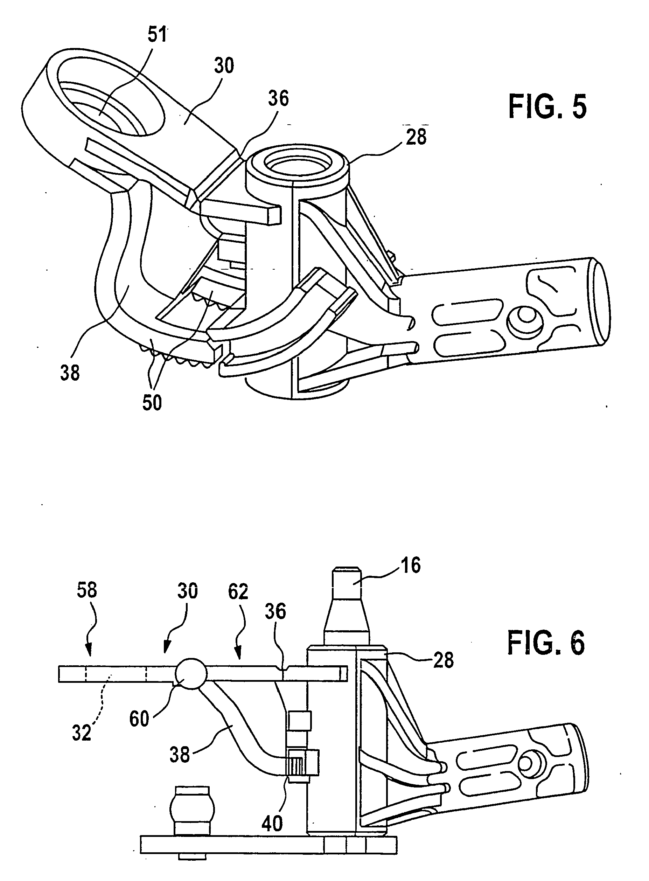

In Figur 5 ist das Wischerlager aus Figur 4 in einer Variation dargestellt. Das freie Ende des Vorsprungs 38 sind hier zwei Fortsätze 50 vorgesehen, die über unterschiedliche Radien verfügen, ansonsten aber in Form und Funktion identisch sind. Dies erleichtert aber das Entformen des Wischerlagers 14, wenn dies in einem Spritzgussverfahren hergestellt wurde. Mutatis mutandis gilt dies natürlich auch für die Führungsbahnen 52.

Nach einem Aufprall ist der Winkel zwischen der Längsachse der Wischerwelle 16 bzw. des Lagerabschnitts 28 und der Ebene des Befestigungselementes 30 verkippt. Um ein leichtes Verkippen zu gewährleisten, so daß der Lagerabschnitt 28 zurückweichen kann, ist es zweckmäßig in das Auge 32 eine Gummibuchse oder ein anderes elastisches Element einzusetzen. Dies trägt sinnvollerweise in seinem Zentrum eine Lagerhülse, die von der Befestigungsschraube oder einem anderen Befestigungselement durchgriffen ist. Hierzu kann insbesondere das Auge diverse Schrägen 51 aufweisen, so dass ein Verkippen des Befestigungselementes 30 gegenüber der Fahrzeugkarosserie ermöglicht ist.

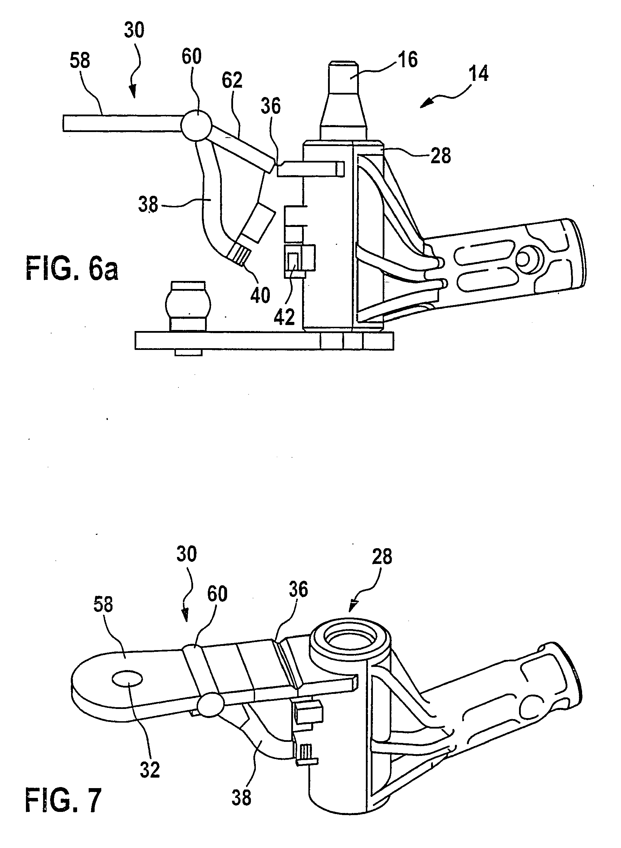

In Figur 6 ist eine Variation eines Wischerlagers einer erfindungsgemäßen Scheibenwischvorrichtung gezeigt. Das Befestigungselement 30 ist hierbei zweiteilig aus Kunststoff ausgebildet. Ein befestigungsseitiges erstes Teil 58 weist das Auge 32 zur Befestigung an der Fahrzeugkarosserie auf. Dies ist mittels eines elastischen Entkopplungsgummis 60 mit dem lagerseitigen zweiten Teil 62 des Befestigungselementes 30 verbunden. Typischerweise ist der Entkopplungsgummi 16 in einem Zwei-Komponenten-Spritzgussverfahren in das Befestigungselement 30 eingespritzt.

In Figur 6a ist das Wischerlager aus Figur 6 nach einem Aufprall dargestellt. Das Clipselement 40 ist vom Verbindungselement 42 getrennt und das Filmscharnier geknickt durch den Entkopplungsgummi 60 zwischen dem ersten Teil 58 und dem zweiten Teil 62 des Befestigungselementes 30, ist das befestigungsseitige erste Teil 58 des Befestigungselementes 30 an der gleichen Position wie vor dem Aufprall und kann somit fest an der Fahrzeugkarosserie befestigt sein. Durch die Elastizität des Entkopplungsgummis 60 wurde der Lagerabschnitt 28 auf einer Achse senkrecht zur Ebene des befestigungsseitigen ersten Teils des Befestigungselements 30 verschoben.

In Figur 7 ist das Wischerlager aus Figuren 6, 6a in einer perspektivischen Darstellung gezeigt. Der Entkopplungsgummi 60 als elastisches Entkopplungselement ist in einem Zwei-Komponenten-Spritzgussverfahren direkt in das Befestigungselement 30 miteingespritzt. Insofern kann auf eine separate Entkopplung zur Geräuschreduzierung im Bereich des Auges 32 verzichtet werden.

In einer Variation der Erfindung kann anstatt dem Entkopplungsgummi 60 auch ein Federstahl Element vorgesehen sein. Dies kann als Streifen zwischen dem ersten Teil 58 und dem zweiten Teil 62 angeordnet sein. Typischerweise wird das erste Teil 58 und das zweite Teil 62 an die Enden des Streifens angegossen.

Das Wischerlager 14 kann aus Kunststoff oder einem Metall, insbesondere als Zink-oder Alu Druckgußteil ausgebildet sein. Natürlich ist auch eine Kombination aus beiden Werkstoffen, auch in einem mehrkomponenten Spritzgußverfahren möglich. Beispielsweise kann der Lagerabschnitt 28 aus einem anderen Material als das Befestigungselement 30 bestehen. Sinnvollerweise besteht der Lagerabschnitt 28 dann aus einem Alu- oder Zink-Druckguß und das Befestigungselement 30 aus Kunststoff. In einer Variation ist dies auch als modularer Aufbau von standardisierten Baukasten Elementen möglich.

## Patentansprüche

1. Scheibenwischvorrichtung (10), insbesondere für ein Kraftfahrzeug, mit einer Rohrplatine (12), die zwei Enden aufweist, an denen jeweils ein Wischerlager (14) befestigt ist, das in einem Lagerabschnitt (28) mindestens eine Wischerwelle (16) lagert, und mit einem Befestigungselement (30) zur Befestigung, insbesondere am Kraftfahrzeug versehen ist, wobei mindestens ein erstes Mittel (36) zum beweglichen Verbinden des Lagerabschnitts (28) des Wischerlagers (14) mit dem Befestigungselement (30) vorgesehen ist **dadurch gekennzeichnet, daß** mindestens ein weiteres Mittel (40) zum Arretieren des Befestigungselements (30) am Lagerabschnitt (28) vorgesehen ist.

2. Scheibenwischvorrichtung (10) nach einem der vorhergehenden Ansprüche, **dadurch gekennzeichnet, daß** das mindestens das erste Mittel (36) derart angeordnet ist, daß der Lagerabschnitt (28) des Wischerlagers (14) bei einer im wesentlichen axialen Krafteinwirkung (F) auf die Wischerwelle (16) im wesentlichen in Richtung der Krafteinwirkung (F) bewegbar ist.

3. Scheibenwischvorrichtung (10) nach einem der vorhergehenden Ansprüche, **dadurch gekennzeichnet, daß** das erste Mittel (36) als Scharnier, insbesondere als Filmscharnier ausgebildet ist.

4. Scheibenwischvorrichtung (10) nach einem der Ansprüche 2 bis 3, **dadurch gekennzeichnet, daß** das weitere Mittel (40) als Clipselement ausgebildet ist.

5. Scheibenwischvorrichtung (10) nach einem der Ansprüche 2 bis 4, **dadurch gekennzeichnet, daß** das weitere Mittel (40) als Sollbruchelement ausgebildet ist.

6. Scheibenwischvorrichtung (10) nach einem der Ansprüche 2 bis 4, **dadurch gekennzeichnet, daß** das weitere Mittel (40) als Rastelement, insbesondere mit radienartiger Mehrfachverzahnung (54) ausgebildet ist.

7. Scheibenwischvorrichtung (10) nach Anspruch 6, **dadurch gekennzeichnet, daß** zumindest zwei radienartige Mehrfachverzahnungen (54) mit unterschiedlichen Radien vorgesehen sind.

8. Scheibenwischvorrichtung (10) nach einem der vorhergehenden Ansprüche, **dadurch gekennzeichnet, daß** das Befestigungselement (30) zumindest ein befestigungsseitiges erstes Teil (58) und ein lagerseitiges zweites Teil (62) aufweist und das erste Teil (58) gegenüber dem zweiten Teil (62) elastisch beweglich ist.

9. Scheibenwischvorrichtung (10) nach einem der vorhergehenden Ansprüche, **dadurch gekennzeichnet, daß** zwischen Befestigungselement (30) und Lagerabschnitt (28) des Wischerlagers (14) mindestens eine Führung (44) zur radialen Abstützung vorgesehen ist.

10. Scheibenwischvorrichtung (10) nach einem der vorhergehenden Ansprüche, **dadurch gekennzeichnet, daß** das Wischerlager (14) aus Kunststoff ausgebildet ist.

## Claims

1. Windscreen wiper device (10), especially for a motor vehicle, with a tubular plate (12) which has two ends, to each of which is fastened a wiper bearing (14) which supports at least one wiper shaft (16) in a bearing section (28) and is provided with a fastening element (30) for fastening, in particular to the motor vehicle, wherein at least one first means (36) is provided for movably connecting the bearing section (28) of the wiper bearing (14) to the fastening element (30), **characterized in that** at least one further means (40) is provided for locking the fastening element (30) to the bearing section (28).

2. Windscreen wiper device (10) according to one of the preceding claims, **characterized in that** the at least one first means (36) is arranged in such a manner that, upon an essentially axial application of force (F) to the wiper shaft (16), the bearing section (28) of the wiper bearing (14) can be moved essentially in the direction of the application of force (F).

3. Windscreen wiper device (10) according to one of the preceding claims, **characterized in that** the first means (36) is designed as a hinge, in particular as a film hinge.

4. Windscreen wiper device (10) according to either of Claims 2 and 3, **characterized in that** the further means (40) is designed as a clip element.

5. Windscreen wiper device (10) according to one of Claims 2 to 4, **characterized in that** the further means (40) is designed as a predetermined breaking element.

6. Windscreen wiper device (10) according to one of Claims 2 to 4, **characterized in that** the further means (40) is designed as a latching element, in particular with a radius-like multiple toothing (54).

7. Windscreen wiper device (10) according to Claim 6, **characterized in that** at least two radius-like multiple toothings (54) are provided with different radii.

8. Windscreen wiper device (10) according to one of the preceding claims, **characterized in that** the fastening element (30) has at least one first part (58) on the fastening side and one second part (62) on the bearing side, and the first part (58) is movable elastically in relation to the second part (62).

9. Windscreen wiper device (10) according to one of the preceding claims, **characterized in that** at least one guide (44) is provided between fastening element (30) and bearing section (28) of the wiper bearing (14) for radial support.

10. Windscreen wiper device (10) according to one of the preceding claims, **characterized in that** the wiper bearing (14) is formed from plastic.

## Revendications

1. Dispositif d'essuie-glace (10), notamment pour un dispositif automobile comportant une platine tubulaire (12) à deux extrémités, chacune d'elle portant solidairement un palier d'essuie-glace (14) logeant au moins un arbre d'essuie-glace (16) dans un segment de palier (28) et un élément de fixation (30) pour la fixation notamment au véhicule automobile,
au moins un premier moyen (36) étant prévu pour relier de manière mobile le segment (28) du palier d'essuie-glace (14) à l'élément de fixation (30),
**caractérisé par**
au moins un autre moyen (40) pour bloquer l'élément de fixation (30) au segment de palier (28).

2. Dispositif d'essuie-glace (10) selon la revendication précédente,
**caractérisé en ce qu'**
au moins le premier moyen (36) est installé pour que le segment de palier (28) du palier d'essuie-glace (14) soit mobile principalement dans la direction d'action de la force (F) si une force axiale important (F) agit sur l'arbre d'essuie-glace (16).

3. Dispositif d'essuie-glace (10) selon l'une des revendications précédentes,
**caractérisé en ce que**
le premier moyen (36) est une charnière, notamment une charnière en forme de film.

4. Dispositif d'essuie-glace (10) selon l'une des revendications 2 à 3,
**caractérisé en ce que**
l'autre moyen (40) est un élément d'enclipsage.

5. Dispositif d'essuie-glace (10) selon l'une des revendications 2 à 4,
**caractérisé en ce que**
l'autre moyen (40) est un élément de rupture de consigne.

6. Dispositif d'essuie-glace (10) selon l'une des revendications 2 à 4,
**caractérisé en ce que**
l'autre moyen (40) est un élément d'enclipsage, notamment une denture multiple, radiale (54).

7. Dispositif d'essuie-glace (10) selon la revendication 6,
**caractérisé par**
au moins deux dentures multiples, radiales (54) à rayons différents.

8. Dispositif d'essuie-glace (10) selon l'une des revendications précédentes,
**caractérisé en ce que**
l'élément de fixation (30) comporte au moins une première partie (58) côté fixation et une seconde partie (62) côté palier, la première partie (58) étant mobile élastiquement par rapport à la seconde partie (62).

9. Dispositif d'essuie-glace (10) selon l'une des revendications précédentes,
**caractérisé par**
au moins un moyen de guidage (44) pour l'appui radial entre l'élément de fixation (30) et le segment de palier (28) du palier d'essuie-glace (14).

10. Dispositif d'essuie-glace (10) selon l'une des revendications précédentes,
**caractérisé en ce que**
le palier d'essuie-glace (14) est en matière plastique.
